# EUROPEAN PATENT APPLICATION

(11) **EP 4 506 937 A1**
(43) Date of publication of application: **12.02.2025**
(21) Application number: 22871156.0
(22) Date of filing: 26.08.2022
(51) Int. Cl.: G10L 17/22, G10L 17/04, G10L 15/06, G10L 15/16, G10L 15/22, G10L 17/02, G10L 17/18, G10L 17/24

(54) **VOICE WAKE-UP MODEL TRAINING METHOD AND APPARATUS, VOICE WAKE-UP METHOD AND APPARATUS, DEVICE AND STORAGE MEDIUM**

(30) Priority: 06.04.2022 CN 202210356735
(71) Applicant: BEIJING BAIDU NETCOM SCIENCE TECHNOLOGY CO., LTD., Beijing 100085 (CN)
(72) Inventor: ZOU, Saisai, Beijing 100085 (CN); CHEN, Li, Beijing 100085 (CN); ZHANG, Ruoxi, Beijing 100085 (CN); JIA, Lei, Beijing 100085 (CN); WANG, Haifeng, Beijing 100085 (CN)
(74) Representative: J A Kemp LLP
(86) International application number: PCT/CN2022/115175
(87) International publication number: WO 2023/193394

(57) **Abstract**

The present disclosure provides a method and an apparatus for training a voice wake-up model, a method and an apparatus for voice wake-up, a device and a storage medium, which relates to the field of artificial intelligence and particularly to the field of deep learning and voice technology. A specific implementation lies in: acquiring voice recognition training data and voice wake-up training data that are created, and firstly performing training on a base model according to the voice recognition training data to obtain a model parameter of the base model when a model loss function converges; then updating, based on a model configuration instruction, a configuration parameter of a decoding module in the base model to obtain a first model; and finally performing training on the first model according to the voice wake-up training data to obtain a trained voice wake-up model when the model loss function converges. According to the above-described scheme, the convergence speed for training the voice wake-up model can be increased; the recognition accuracy can be improved and the false alarm rate can be reduced by means of processing and analyzing audio data based on the above voice wake-up model.

## Description

### TECHNICAL FIELD

The present disclosure relates to the field of deep learning and voice technology in artificial intelligence, and particularly to a method and an apparatus for training a voice wake-up model, a method and an apparatus for voice wake-up, a device, and a storage medium.

### BACKGROUND

With the development of artificial intelligence, more and more electronic devices have begun to support voice interaction functions. Voice wake-up, serving as a key to voice interaction, occupies an important part thereof. Currently, a voice wake-up function has a problem that multiple devices are awakened simultaneously, for example, devices of the same brand typically support a same wake-up word, which will lead to an embarrassing situation in which multiple devices might respond in once wake-up.

### SUMMARY

The present disclosure provides a method and an apparatus for training a voice wake-up model, a method and an apparatus for voice wake-up, a device and a storage medium.

According to a first aspect of the present disclosure, provided is a method for training a voice wake-up model, including:
acquiring voice recognition training data, and performing voice recognition training on a base model according to the voice recognition training data to obtain a model parameter of the base model when a model loss function converges, where the base model includes an encoding module and a decoding module;
updating, based on the model parameter of the base model in response to a model configuration instruction initiated by a user, a configuration parameter of the decoding module in the base model to obtain a first model;
acquiring voice wake-up training data, and performing voice wake-up training on the first model according to the voice wake-up training data to obtain the first model when the model loss function converges; and
taking the first model when the model loss function converges as the voice wake-up model.

According to a second aspect of the present disclosure, provided is a method for voice wake-up, including:
receiving audio data input by a user;
performing feature extraction on the audio data to obtain a FilterBank FBank feature corresponding to the audio data;
encoding, based on an encoding module of a voice wake-up model, the FBank feature corresponding to the audio data to obtain a feature coding sequence corresponding to the audio data; determining, with use of connectionist temporal classification ctc decoding, a target feature coding sequence of the feature coding sequence having a score greater than or equal to a preset value;
acquiring a semantic tag sequence corresponding to a user-defined wake-up word; and
decoding and analyzing the target feature coding sequence and the semantic tag sequence based on a decoding module of the voice wake-up model, and determining whether to awaken the terminal device.

According to a third aspect of the present disclosure, provided is an apparatus for training a voice wake-up model, including:
a first acquiring module, configured to acquire voice recognition training data;
a first training module, configured to perform voice recognition training on a base model according to the voice recognition training data to obtain a model parameter of the base model when a model loss function converges, where the base model includes an encoding module and a decoding module;
a model configuration module, configured to update, based on the model parameter of the base model in response to a model configuration instruction initiated by a user, a configuration parameter of the decoding module in the base model to obtain a first model;
a second acquiring module, configured to acquire voice wake-up training data;
a second training module, configured to perform voice wake-up training on the first model according to the voice wake-up training data to obtain the first model when the model loss function converges; and
a model generating module, configured to take the first model when the model loss function converges as the voice wake-up model.

According to a fourth aspect of the present disclosure, provided is an apparatus for voice wake-up, including:
a receiving module, configured to receive audio data input by a user;
a feature extraction module, configured to perform feature extraction on the audio data to obtain an FBank feature corresponding to the audio data;
a first processing module, configured to encode, based on an encoding module of a voice wake-up model, the FBank feature corresponding to the audio data to obtain a feature coding sequence corresponding to the audio data;
a second processing module, configured to determine, with use of ctc decoding, a target feature coding sequence of the feature coding sequence having a score greater than or equal to a preset value;
an acquiring module, configured to acquire a semantic tag sequence corresponding to a user-defined wake-up word; and
a third processing module, configured to decode and analyze the target feature coding sequence and the semantic tag sequence based on a decoding module of the voice wake-up model, and determine whether to awaken a terminal device.

According to a fifth aspect of the present disclosure, provided is an electronic device, including:
at least one processor, and
a memory communicatively connected with the at least one processor;
where the memory has stored therein instructions executable by the at least one processor, and the instructions, when executed by the at least one processor, enable the at least one processor to implement the method according to the first aspect or the second aspect.

According to a sixth aspect of the present disclosure, provided is a non-transitory computer-readable storage medium on which computer instructions are stored, where the computer instructions are configured to enable a computer to implement the method according to the first aspect or the second aspect.

According to a seventh aspect of the present disclosure, provided is a computer program product. The computer program product includes a computer program. The computer program is stored in a readable storage medium from which at least one processor of an electronic device can read the computer program, and the at least one processor executes the computer program so that the electronic device performs the method according to the first aspect or the second aspect.

According to the technology of the present disclosure, the accuracy of self-defined voice wake-up can be improved.

It should be understood that the content described in this section is neither intended to identify key or important features of embodiments of the present disclosure, nor is used to limit the scope of the present disclosure. Other features of the present disclosure will become readily comprehensible through the following description.

### BRIEF DESCRIPTION OF DRAWINGS

The drawings are intended for comprehensive understanding of the present solution and do not constitute a limitation to the present disclosure.
FIG. 1 is a schematic diagram of an application scenario according to an embodiment of the present disclosure.
FIG. 2 is a schematic structural diagram of a voice wake-up model according to an embodiment of the present disclosure.
FIG. 3 is a schematic flow diagram of a method for training a voice wake-up model according to an embodiment of the present disclosure.
FIG. 4 is a schematic flow diagram for creating voice recognition training data according to an embodiment of the present disclosure.
FIG. 5 is a schematic flow diagram for creating voice wake-up training data according to an embodiment of the present disclosure.
FIG. 6 is a schematic flow diagram of a method for voice wake-up according to an embodiment of the present disclosure.
FIG. 7 is a schematic structural diagram of a voice wake-up model according to an embodiment of the present disclosure.
FIG. 8 is a schematic structural diagram of an apparatus for training a voice wake-up model according to an embodiment of the present disclosure.
FIG. 9 is a schematic structural diagram of an apparatus for voice wake-up according to an embodiment of the present disclosure.
FIG. 10 is a schematic structural diagram of an electronic device according to an embodiment of the present disclosure.

### DESCRIPTION OF EMBODIMENTS

Exemplary embodiments of the present disclosure will be described hereunder with reference to the accompanying drawings, which include therein various details of the embodiments of the present disclosure to facilitate understanding and should be considered as being merely exemplary. Therefore, those of ordinary skill in the art should realize that various changes and modifications can be made to the embodiments described herein without departing from the scope of the present disclosure. Likewise, for clarity and conciseness, descriptions of well-known functions and structures are omitted in the following description.

A self-defined wake-up word can solve the problem that multiple devices are awakened simultaneously, for example, a user sets different self-defined wake-up words for different devices as required. However, voice wake-up based on a self-defined wake-up word is of low accuracy.

The present disclosure provides a method for training a voice wake-up model and a method for voice wake-up, which is applied to the field of deep learning and voice technology in artificial intelligence so as to improve the accuracy of self-defined voice wake-up.

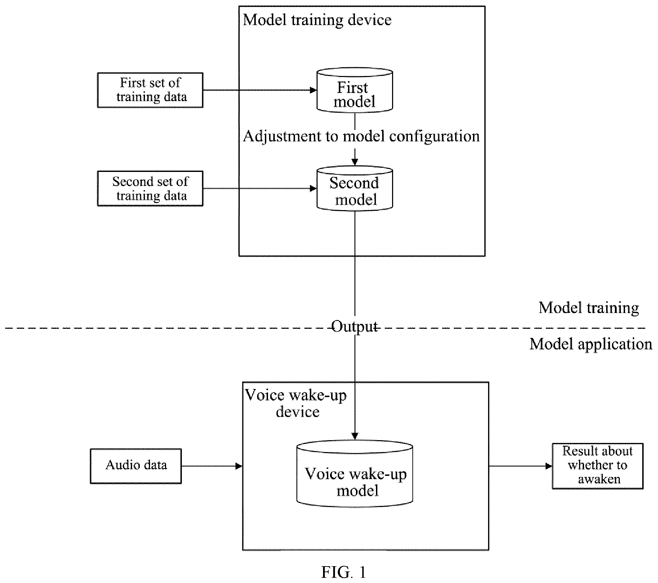

In order to facilitate the understanding of the technical solution provided in the present disclosure, firstly an application scenario according to an embodiment of the present disclosure will be described in conjunction with FIG. 1.

FIG. 1 is a schematic diagram of an application scenario according to an embodiment of the present disclosure. As shown in FIG. 1, the application scenario involves a model training stage and a model application stage.

During the model training stage, a first model is trained based on a first set of training data by a model training device. The first set of training data includes training data for voice recognition, and the first model has a voice recognition function. By adjusting a model configuration parameter of the first model, a second model is obtained. The second model is trained based on a second set of training data by the model training device, where the second set of training data includes training data for voice wake-up, and the second model has a voice wake-up function. The trained second model is used as the final voice wake-up model.

It should be noted that the first model and the second model maintain a consistent model structure, but they two are different in terms of their parameter configurations at the model output part, e.g., dimension parameters are different.

It can be understood that the first model has a voice recognition function, and the output of the first model is syllable information corresponding to audio data, such as an atonal syllable sequence. The second model has the voice wake-up function, and the output of the second model is a binary classification wake-up result about whether to awaken or not. Thus, it can be seen that the first model and the second model have different dimension parameters at the model output part.

During the model application stage, the trained second model is preset in the voice wake-up device, that is, the voice wake-up model in FIG. 1, the voice wake-up device receives the audio data input by the user, and finally a result about whether to awaken or not is obtained through a preprocessing process of the audio data and processing and analysis of the voice wake-up model.

In the embodiments of the present disclosure, the voice wake-up model may adopt an encoder-decoder architecture, or other model structure including an encoder and a decoder. The encoder can alternatively be termed as an encoding module, and the decoder can alternatively be termed as a decoding module.

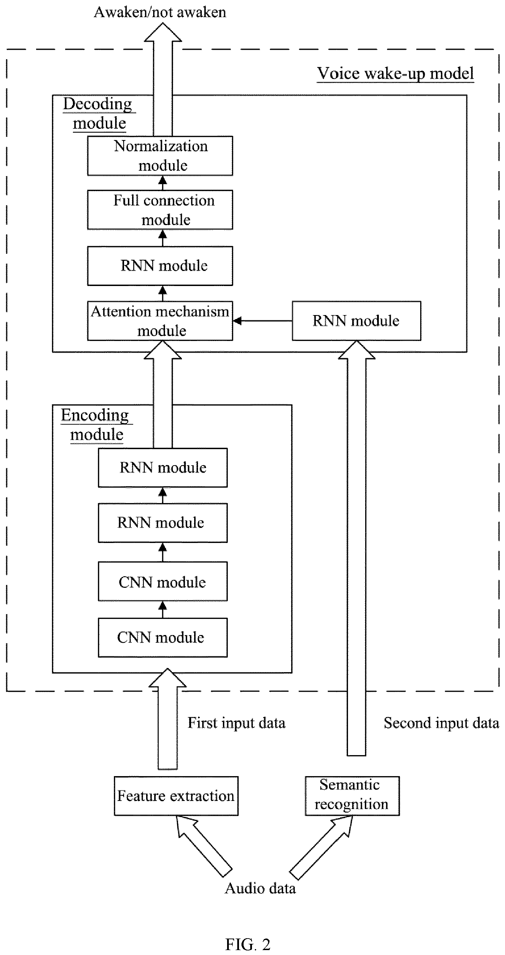

The internal structure of the voice wake-up model will be described hereunder in detail in conjunction with FIG. 2.

FIG. 2 is a schematic structural diagram of a voice wake-up model according to an embodiment of the present disclosure. As shown in FIG. 2, the voice wake-up model provided in the present embodiment includes an encoding module and a decoding module.

The encoding module includes convolutional neural network (CNN) modules and recurrent neural network (RNN) modules. FIG. 2 shows 2 CNN modules and 2 RNN modules, where the encoding module has a data processing process of: first going through the 2 CNN modules, then going through the 2 RNN modules. The encoding module is configured to encode an audio feature to obtain the encoded feature data.

The decoding module includes an attention mechanism module, RNN modules, a full connection (full) module and a normalization (softmax) module. FIG. 2 shows two RNN modules, and the decoding module has a data processing process of: inputting data of one path into the attention mechanism module through the RNN module, and inputting data of another path directly into the attention mechanism module; then going through the RNN module, the full connection module and the normalization module after the processing from the attention mechanism module, and finally outputting a result about whether to awaken or not.

Optionally, in some embodiments, the above-described RNN modules can be replaced with long short term memory (LSTM) modules.

It should be noted that the voice wake-up model includes input data of two paths, where first input data is a feature sequence corresponding to audio data, e.g., a FilterBank (FBank) feature, a Mel-frequency cepstral coefficient (MFCC) feature, etc. Second input data is a semantic tag sequence corresponding to the audio data.

It should be noted that the model training device or the voice wake-up device in the embodiments of the present disclosure may be a terminal device, or a server, or a virtual machine, or the like; also, it may be a distributed computer system composed of one or more servers and/or computers.

The terminal device includes, but is not limited to a smart phone, a laptop computer, a desktop computer, a platform computer, a vehicle-mounted device, a smart wearable device, etc., which is not limited in the embodiments of the present disclosure. The server may be an ordinary server or a cloud server. The cloud server is also known as a cloud computing server or a cloud host, which is a host product in the cloud computing service system. The server also may be a server of a distributed system, or a server incorporating a blockchain.

The embodiments of the present disclosure firstly construct training data sets for two rounds of model training, that is, construct a set of training data for voice recognition and a set of training data for voice wake-up; perform, based on a base model and the set of training data for voice recognition, pre-training for voice recognition; subsequent to adjustment of a model configuration parameter, perform secondary training for voice wake-up based on the pre-trained model and the set of training data for voice wake-up; and finally generate a voice wake-up model available for recognition of a user-defined wake-up word. The voice wake-up model may adopt an encoder-decoder structure, and the attention mechanism is used in the decoder part. In the voice wake-up model obtained in the above-described training process, compared with the existing wake-up scheme, the recognition accuracy of a self-defined voice wake-up model is improved, and the recognition accuracy approximates to a level of customized wake-up while the false alarm rate is reduced. In addition, the voice wake-up model obtained in the above-described training process can meet wake-up requirements of scenarios including in-vehicle and smart home.

In conjunction with the application scenario shown in FIG. 1, the technical solution of the present disclosure will be described hereunder in detail with specific embodiments. It should be noted that the following specific embodiments can be combined with each other, and for the same or similar concepts or processes, details may be omitted in certain embodiments for the sake of redundancy.

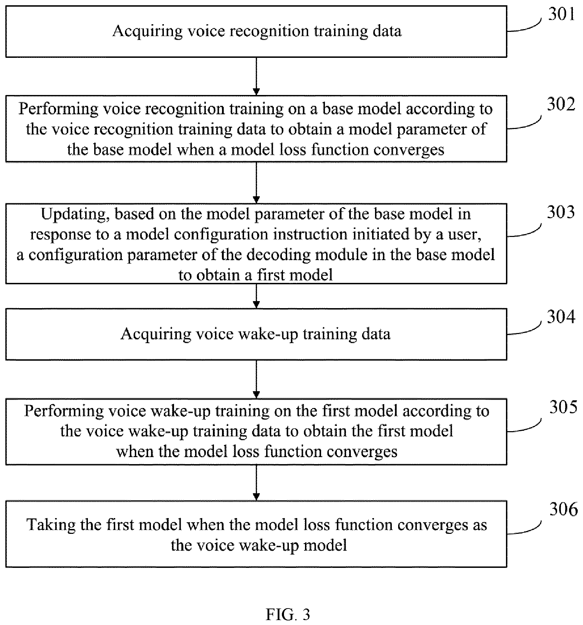

FIG. 3 is a schematic flow diagram of a method for training a voice wake-up model according to an embodiment of the present disclosure. The method is explained by using the model training device in FIG. 1 as an execution subject. As shown in FIG. 3, the method for training the voice wake-up model can include the following steps.

Step 301, acquiring voice recognition training data.

In the present embodiment, the voice recognition training data includes an FBank feature, a semantic tag sequence and a syllable sequence corresponding to first audio data, where the first audio data is any audio data, with a self-defined wake-up word, input by a user.

The FBank feature corresponding to the first audio data is obtained from feature extraction on the first audio data. The semantic tag sequence corresponding to the first audio data is used to indicate semantic information of the first audio data. The syllable sequence corresponding to the first audio data is an atonal syllable sequence aligned at a frame level.

Step 302, performing voice recognition training on a base model according to the voice recognition training data to obtain a model parameter of the base model when a model loss function converges.

In the present embodiment, the model is trained by taking the FBank feature corresponding to the first audio data and the semantic tag sequence corresponding to the first audio data in the voice recognition training data as inputs of the base model and taking the syllable sequence corresponding to the first audio data in the voice recognition training data as an output of the base model, and when a loss function of the base model converges, a model parameter when the loss function of the base model converges is acquired. Reference can be made to FIG. 2 for the internal structure of the base model, which will not be described here again.

Step 303, updating, based on the model parameter of the base model in response to a model configuration instruction initiated by a user, a configuration parameter of the decoding module in the base model to obtain a first model.

The configuration parameter includes an output dimension of the model. To be noted, other parameters for updating the model can be set according to actual demand, which is not limited in the present embodiment.

As an example, updating the configuration parameter of the decoding module in the base model includes modifying the output dimension of the decoding module in the base model at the output. Since a voice wake-up task has an output result including two results, i.e., wake-up and non-wake-up, it is necessary to modify the output dimension of the decoding module in the base model at the output to two-dimensional.

The above-identified modification logic can be written into configuration information of the device, and based on the configuration information of the device, the configuration parameter of the decoding module in the trained base model is updated on the basis of the trained base model.

Step 304, acquiring voice wake-up training data.

In the present embodiment, the voice wake-up training data includes positive-example training data and negative-example training data, where the positive-example training data includes the FBank feature, the semantic tag sequence and a wake-up tag corresponding to the first audio data, and the negative-example training data includes the FBank feature corresponding to the first audio data, a randomly generated semantic tag sequence and a non-wake-up tag.

The positive-example training data of the voice wake-up training data is constructed based on the voice recognition training data, which differs from the voice recognition training data in that the syllable sequence corresponding to the first audio data is replaced with a wake-up tag for the positive-example training data of the voice wake-up training data. In the training stage for voice wake-up, the first audio data is also known as positive-example audio data.

The audio data corresponding to the negative-example training data of the voice wake-up training data is likewise audio data input by the user (that is, the negative-example audio data), but the audio data does not contain a user-defined wake-up word. It should be pointed out that a semantic tag sequence can be randomly generated for the negative-example audio data, as long as this semantic tag sequence is different from the semantic tag sequence corresponding to the negative-example audio data.

Step 305, performing voice wake-up training on the first model according to the voice wake-up training data to obtain the first model when the model loss function converges.

In the present embodiment, the model is trained by taking the FBank feature corresponding to the first audio data and the semantic tag sequence corresponding to the first audio data in the voice wake-up training data as inputs of the first model and the wake-up tag as an output of the first model, as well as taking the FBank feature corresponding to the first audio data and the randomly generated semantic tag sequence in the voice wake-up training data as inputs of the first model and the non-wake-up tag as an output of the first model, and when a loss function of the first model converges, a model parameter when the loss function of the first model converges is acquired. Reference can be made to FIG. 2 for the internal structure of the first model, which will not be described here again.

It should be noted that the same loss function can be used in training the base model and the first model. In light of the model structure, each of the base model and the first model includes an encoding module and a decoding module, where the encoding module corresponds to a loss function, and the decoding module corresponds to a loss function, so each of the base model and the first model includes two loss functions.

As an example, the loss function corresponding to the encoding module of the base model is the same as the loss function corresponding to the encoding module of the first model, for example, a connectionist temporal classification (ctc) loss function is used for both; the loss function corresponding to the decoding module of the base model is the same as the loss function corresponding to the decoding module of the first model, for example, a cross-entropy error (ce) loss function is used for both.

Optionally, in some embodiments, the loss function corresponding to the encoding module of the base model may be different from the loss function corresponding to the encoding module of the first model, and the loss function corresponding to the decoding module of the base model may be different from the loss function corresponding to the decoding module of the first model.

Step 306, taking the first model when the model loss function converges as the voice wake-up model.

The method for training the voice wake-up model shown in the present embodiment lies in: acquiring voice recognition training data and voice wake-up training data that are created, and firstly performing voice recognition training on a base model according to the voice recognition training data to obtain a model parameter of the base model when a model loss function converges; then updating, based on a model configuration instruction initiated by a user, a configuration parameter of a decoding module in the base model to obtain a first model; and finally performing voice wake-up training on the first model according to the voice wake-up training data to obtain the first model when the model loss function converges, and taking the same as an ultimate voice wake-up model. According to the above-described model training scheme, the voice wake-up training is performed based on the model parameter for the voice recognition training by adjusting the configuration parameter of the decoding module in the model, the convergence speed for training the voice wake-up model can be increased, the recognition accuracy of the voice wake-up model can be improved, and the false alarm rate can be reduced.

Optionally, in some embodiments, the updating, based on the model parameter of the base model in response to the model configuration instruction initiated by the user, the configuration parameter of the decoding module in the base model to obtain the first model includes: updating, based on the model parameter of the base model in response to the model configuration instruction initiated by the user, a configuration parameter of a full connection sub-module and a normalization sub-module of the decoding module in the base model, to obtain the first model. As an example, the updating the configuration parameter of the full connection sub-module and the normalization sub-module of the decoding module in the base model includes: updating an output dimension of the full connection sub-module and the normalization sub-module of the decoding module in the base model to two-dimensional.

In the present embodiment, the adjustment to the model function is achieved by adjusting the model parameter of the base model, and after the voice recognition function is adjusted to the voice wake-up function, the objective of voice wake-up is achieved through a second round of model training, that is, the voice wake-up training.

Optionally, in some embodiments, each of the loss function of the base model and the loss function of the first model includes a ctc loss function and a ce loss function.

The ctc loss function is configured to train the encoding module of the base model or the first model.

The ce loss function is configured to train the decoding module of the base model or the first model.

In an optional embodiment of the present embodiment, the performing the voice recognition training on the base model according to the voice recognition training data to obtain the model parameter of the base model when the model loss function converges includes: performing joint training on the encoding module and the decoding module of the base model according to the voice recognition training data, and obtaining the model parameter of the base model when both a ctc loss function corresponding to the encoding module and a ce loss function corresponding to the decoding module converge.

In an optional embodiment of the present embodiment, the performing the voice wake-up training on the first model according to the voice wake-up training data, to obtain the first model when the model loss function converges includes: performing joint training on an encoding module and a decoding module of the first model according to the voice wake-up training data, and obtaining the first model when both a ctc loss function corresponding to the encoding module and a ce loss function corresponding to the decoding module converge.

In the present embodiment, model training is performed on the base model and the first model respectively based on the above-described two loss functions, which can accelerate the convergence speed of the model training.

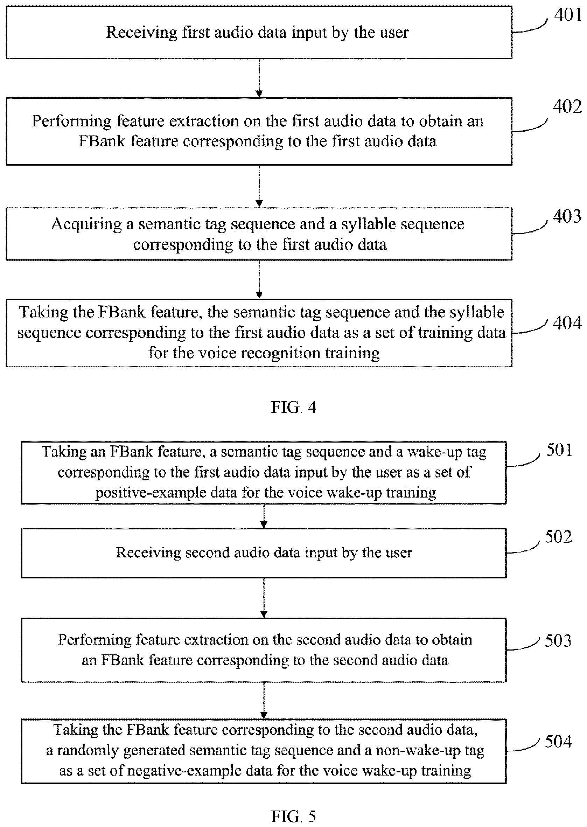

FIG. 4 is a schematic flow diagram for creating voice recognition training data according to an embodiment of the present disclosure. The model training device in FIG. 1 can be used as an execution subject for this process, or other device independent of the model training device can be used as an execution subject. As shown in FIG. 4, the process of creating the voice recognition training data can include the following steps.

Step 401, receiving first audio data input by the user, where the first audio data is audio data containing a self-defined wake-up word.

Step 402, performing feature extraction on the first audio data to obtain an FBank feature corresponding to the first audio data.

In the present embodiment, performing the feature extraction on the first audio data refers to performing the feature extraction on the first audio data on a frame-wise basis. The first audio data is segmented into frames to obtain time domain signals. In order to extract the FBank feature, firstly, it is necessary to convert the time domain signals into frequency domain signals, which can be converted from the time domain to the frequency domain through Fourier transform. Upon completion of the Fourier transform, the frequency domain signals are obtained; each frequency band range has a different energy magnitude, and different phonemes have different energy spectra. Then, through Mel filtering and logarithmic operation, the FBank feature corresponding to the first audio data is obtained.

Step 403, acquiring a semantic tag sequence and a syllable sequence corresponding to the first audio data.

In the present embodiment, semantic information is obtained from semantic recognition on the first audio data, and a semantic tag sequence corresponding to the semantic information, that is, the semantic tag sequence corresponding to the first audio data, is obtained based on a preset tag library.

The tag library includes the number corresponding to each Chinese word, that is, the correspondence of each Chinese word to the number, for example, " 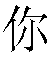 " and " 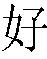 " (English: Hello) correspond to 8 and 9 respectively.

Exemplarily, after the semantic information corresponding to the audio data is determined, a number sequence corresponding to the semantic information can be generated based on the tag library, and the number sequence is the semantic tag sequence. For example, the semantic information obtained by semantic recognition is " 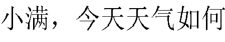 " (English: Xiaoman, how is the weather today). In the tag library, " 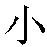 " corresponds to 0, " 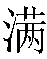 " corresponds to 7, " 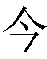 " corresponds to 2, " 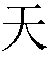 " corresponds to 1, " 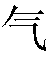 " corresponds to 3, " 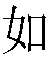 " corresponds to 5 and " 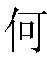 " corresponds to 6, and thus a corresponding semantic tag sequence of {0,7,2,1,1,3,5,6} can be generated. In this example, the user-defined wake-up word is " 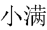 ".

In the present embodiment, by performing a frame-level analysis on the first audio data, the syllable corresponding to each frame in the first audio data is obtained, and the syllable sequence corresponding to the first audio data is obtained based on the preset tag library.

The tag library includes the number corresponding to the syllable of each Chinese word, that is, the correspondence of the syllable of each Chinese word to the number, for example, the syllables "ni" and "hao" (English: Hello) correspond to 8 and 9 respectively.

Exemplarily, after the syllable corresponding to each frame in the audio data is determined, the syllable sequence corresponding to the audio data can be generated based on the tag library, for example, the syllables corresponding to " 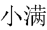 " in the audio data are xiaoxiaoxiaomanman, and the syllables "xiao" and "man" in the tag library correspond to 0 and 7 respectively, and thus a corresponding syllable sequence of {0,0,0,7,7} can be generated.

To be noted, Steps 402 and 403 may be executed sequentially or simultaneously, which is not limited in the present embodiment.

Step 404, taking the FBank feature, the semantic tag sequence and the syllable sequence corresponding to the first audio data as a set of training data for the voice recognition training.

In the present embodiment, the FBank feature corresponding to the first audio data is used as an input of the encoding module in the base model, the semantic tag sequence corresponding to the first audio data is used as an input of the decoding module in the base model, and the syllable sequence corresponding to the first audio data is used as an output of the decoding module in the base model.

Optionally, in some embodiments, an MFCC feature corresponding to the first audio data can also be extracted, and the MFCC feature, the semantic tag sequence and the syllable sequence corresponding to the first audio data are used as a set of training data for the voice recognition training.

The MFCC feature is based on the discrete cosine transformation (DCT) towards the FBank feature, which has a better degree of discrimination over the FBank feature, but with a larger amount of calculations.

The voice recognition training data shown in the present embodiment includes a plurality of sets of training data, where each set of training data includes user-defined audio data as well as a semantic tag sequence and a syllable sequence corresponding to the audio data. The training on the base model enables the model to accurately recognize user-defined audio data so that the recognition effect of the self-defined audio is improved.

FIG. 5 is a schematic flow diagram for creating voice wake-up training data according to an embodiment of the present disclosure. The model training device in FIG. 1 can be used as an execution subject for this process, or other device independent of the model training device can be used as an execution subject. As shown in FIG. 5, the process of creating the voice wake-up training data can include the following steps.

Step 501, taking an FBank feature, a semantic tag sequence and a wake-up tag corresponding to the first audio data input by the user as a set of positive-example data for the voice wake-up training, where the first audio data is audio data containing a self-defined wake-up word.

In the present embodiment, the positive-example data of the voice wake-up training data is created based on the existing data in the voice recognition training data, and a set of positive-example data can be obtained as long as the syllable sequence corresponding to the first audio data is replaced with a wake-up tag.

For any set of positive-example data, the FBank feature corresponding to the first audio data is used as an input of the encoding module in the first model, the semantic tag sequence corresponding to the first audio data is used as an input of the decoding module in the first model, and the wake-up tag is used as an output of the decoding module in the first model.

Step 502, receiving second audio data input by the user.

In the present embodiment, the second audio data is audio data excluding the user-defined wake word.

Step 503, performing feature extraction on the second audio data to obtain an FBank feature corresponding to the second audio data. Reference can be made to step 402 in the foregoing embodiment for the method of feature extraction on the second audio data, which will not be described here again.

Step 504, taking the FBank feature corresponding to the second audio data, a randomly generated semantic tag sequence and a non-wake-up tag as a set of negative-example data for the voice wake-up training.

For any set of negative-example data, the FBank feature corresponding to the second audio data is used as an input of the encoding module in the first model, the randomly generated semantic tag sequence is used as an input of the decoding module in the first model, and the non-wake-up tag is used as an output of the decoding module in the first model.

The randomly generated semantic tag sequence is different from a semantic tag sequence corresponding to the second audio data. Exemplarily, the negative-example training data is constructed based on the example of Step 403, for example, the semantic information of the negative-example audio data is " 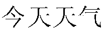 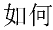 " (English: how is the weather today), which does not contain the user-defined wake-up word " 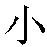 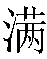 ". The semantic tag sequence corresponding to the negative-example audio data is {2,1,1,3,5,6}. The case is permitted as long as the randomly generated semantic tag sequence is different from {2,1,1,3,5,6}.

It should be understood that the semantic tag sequence corresponding to the semantic information of the positive-example audio data can also be used, e.g., {0,7,2,1,1,3,5,6} in the example of Step 403 can be used as a semantic tag sequence in a set of negative-example training data constructed based on the negative-example audio data.

Optionally, in some embodiments, the MFCC feature(s) corresponding to the first audio data/second audio data can also be extracted. The MFCC feature, the semantic tag sequence and the wake-up tag corresponding to the first audio data are used as a set of positive-example data for the voice wake-up training, and the MFCC feature corresponding to the second audio data, the randomly generated semantic tag sequence and the non-wake-up tag are used as a set of negative-example data for the voice wake-up training.

The voice wake-up training data shown in the present embodiment includes a plurality of sets of positive-example data and a plurality of sets of negative-example data, where each set of positive-example data includes user-defined audio data as well as a semantic tag sequence and a wake-up tag corresponding to the audio data, and each set of negative-example data includes audio data excluding the user-defined wake-up word, a randomly generated semantic tag sequence and a non-wake-up tag. The training on the first model based on the voice wake-up training data enables the model to accurately determine whether to awaken the device, so that the recognition effect of self-defined audio can be improved for wake-up.

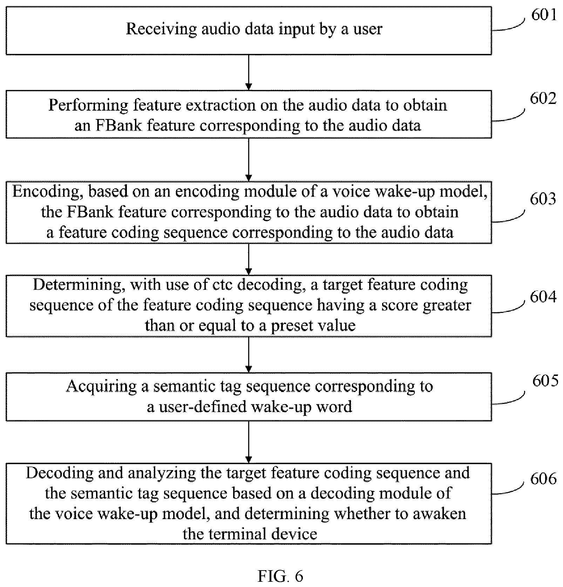

Based on the above-described embodiments, the trained voice wake-up model can be preset in a voice wake-up device, such as a smart speaker, a television, a mobile phone or other device, so that the device has a function of self-defined voice wake-up. The data processing process of the voice wake-up device will be described hereunder in conjunction with FIG. 6.

FIG. 6 is a schematic flow diagram of a method for voice wake-up according to an embodiment of the present disclosure. The voice wake-up device in FIG. 1 can be used as an execution subject for this process. As shown in FIG. 6, the method for voice wake-up may include the following steps.

Step 601, receiving audio data input by a user.

Step 602, performing feature extraction on the audio data to obtain an FBank feature corresponding to the audio data. Reference can be made to step 402 in the foregoing embodiment for the method of feature extraction on the audio data, which will not be described here again.

Step 603, encoding, based on an encoding module of a voice wake-up model, the FBank feature corresponding to the audio data to obtain a feature coding sequence corresponding to the audio data.

In the present embodiment, the FBank feature corresponding to the audio data is used as an input of the encoding module in the voice wake-up model, and with reference to FIG. 2, the Fbank feature corresponding to the audio data is input into a CNN module at the bottom of the encoding module, and the feature coding sequence corresponding to the audio data is output after processing from two CNN modules and two RNN modules.

Step 604, determining, with use of ctc decoding, a target feature coding sequence of the feature coding sequence having a score greater than or equal to a preset value.

In the present embodiment, the ctc decoding is based on a sliding window of a preset length, such as a sliding window of 2s, performs decoding starting from the feature coding sequence corresponding to a start position of the sliding window, acquires an audio segment having a decoding score greater than or equal to a preset value, and the feature coding sequence corresponding to the audio segment, that is, the target feature coding sequence, is used as an input of the decoding module in the voice wake-up model. The preset value can be properly set according to an actual application, which is not specifically limited in the present embodiment.

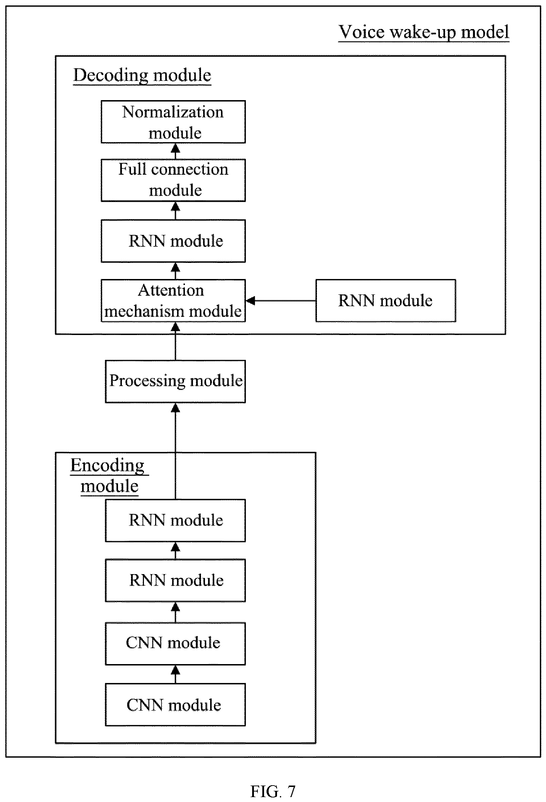

It should be noted that the training process of the voice wake-up model does not include this step, and the ctc decoding can be used as a separate processing module. FIG. 7 is a schematic structural diagram of a voice wake-up model according to an embodiment of the present disclosure. As shown in FIG. 7, a processing module used for ctc decoding is placed between the encoding module and a decoding module of the voice wake-up model, and subsequent to filtering from the processing module, a target feature coding sequence having a score greater than or equal to a preset value is output to a attention mechanism module of the decoding module in the voice wake-up model.

Step 605, acquiring a semantic tag sequence corresponding to a user-defined wake-up word.

The semantic tag sequence corresponding to the user-defined wake-up word is pre-stored in the voice wake-up device, and for an acquisition method thereof, reference can be made to step 403 in the foregoing embodiment.

Step 606, decoding and analyzing the target feature coding sequence and the semantic tag sequence based on a decoding module of the voice wake-up model, and determining whether to awaken the terminal device.

In the present embodiment, the target feature coding sequence and the semantic tag sequence corresponding to the user-defined wake-up word are used as inputs of the decoding module of the voice wake-up model, referring to FIG. 2, the semantic tag sequence corresponding to the user-defined wake-up word is input into the RNN module of the decoding module (the RNN module on the right side of the attention mechanism module), the target feature coding sequence is input into the attention mechanism module of the decoding module, and subsequent to the processing from the attention mechanism module, the RNN module, a full connection module and a normalization module, a result about whether to awaken is output.

The voice wake-up method shown in the present embodiment is based on a trained voice wake-up model adopting an encoder-decoder architecture, where the model decoding part includes an attention mechanism module, thereby greatly improving the performance of self-defined voice wake-up.

According to the voice wake-up scheme shown in the embodiments of the present disclosure, whether to awaken the device is determined based on a voice wake-up model containing an attention mechanism module. Table 1 and Table 2 are obtained through experimental tests, where Table 1 shows test statistic data of convolutional neural network CNN-deep neural network (DNN) self-defined wake-up versus self-defined wake-up containing the attention mechanism, and Table 2 shows test statistic data of customized wake-up versus self-defined wake-up containing the attention mechanism. It should be pointed out that the customized wake-up means that a wake-up word is preset in a device by the manufacturer before the device leaves the factory, and there is no function of changing the wake-up word, and generally the customized wake-up outperforms the self-defined wake-up.

**Table 1**

| | Test precision in quiet environment | Test precision in environment of internal noise | Number of false alarms /10h |
|---|---|---|---|
| CNN-DNN self-defined wake-up | 0.987 | 0.827 | 218 |
| Self-defined wake-up containing attention mechanism | 1 | 0.963 | 59 |

**Table 2**

| | Test precision in environment of internal noise | Test precision in environment of external noise | Average false alarms for single word /10h |
|---|---|---|---|
| Customized wake-up | 0.989 | 0.982 | 1.650 |
| Self-defined wake-up containing attention mechanism | 0.988 | 0.953 | 1.800 |

It can be seen from Table 1 that, compared with the CNN-DNN scheme, the precision under internal noise is increased by 13.6% while the false alarm is decreased by more than 70% for the self-defined wake-up scheme in this case.

It can be seen from Table 2 that, compared with the customized wake-up scheme, when the false alarms basically keep aligned, the precision under internal noise is decreased by 0.1% while the precision under external noise is decreased by 2.9% for the self-defined wake-up scheme in this case. The precision of the self-defined wake-up scheme in this case approximates to the level of the customized wake-up.

It should be noted that the internal noise refers to the noise generated by the device itself, and the external noise refers to the sum of noise generated by the environment in which the device is located. The external noise includes background noise and point noise, where the background noise includes, for example, noise of air conditioners and car noise, which is stable noise; the point noise is noise with a definite direction, which is non-stable noise.

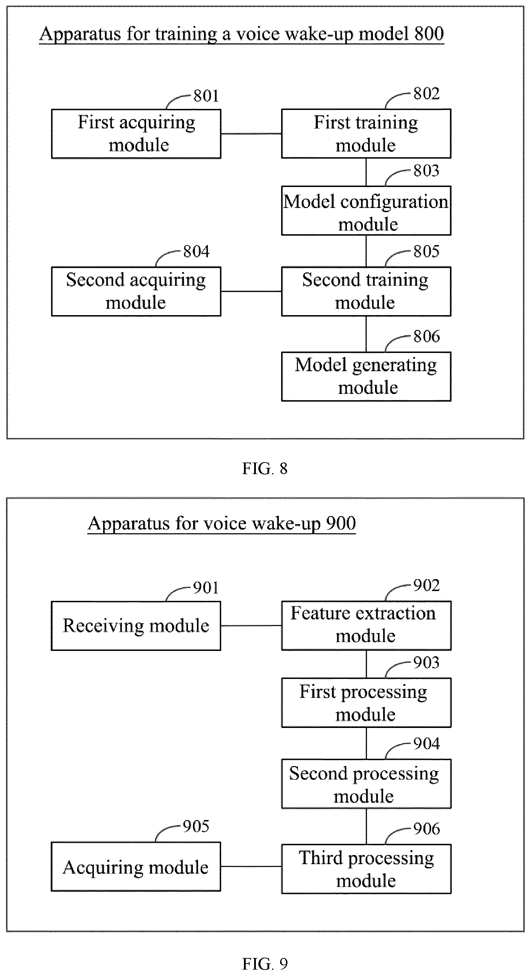

FIG. 8 is a schematic structural diagram of an apparatus for training a voice wake-up model according to an embodiment of the present disclosure. The apparatus for training the voice wake-up model according to the present embodiment may be an electronic device or an apparatus in the electronic device. As shown in FIG. 8, the apparatus for training the voice wake-up model 800 according to the embodiment of the present disclosure may include:
a first acquiring module 801, configured to acquire voice recognition training data;
a first training module 802, configured to perform voice recognition training on a base model according to the voice recognition training data to obtain a model parameter of the base model when a model loss function converges, where the base model includes an encoding module and a decoding module;
a model configuration module 803, configured to update, based on the model parameter of the base model in response to a model configuration instruction initiated by a user, a configuration parameter of the decoding module in the base model to obtain a first model;
a second acquiring module 804, configured to acquire voice wake-up training data;
a second training module 805, configured to perform voice wake-up training on the first model according to the voice wake-up training data to obtain the first model when the model loss function converges; and
a model generating module 806, configured to take the first model when the model loss function converges as the voice wake-up model.

In an optional embodiment of the present embodiment, the model configuration module 803 includes: a model parameter updating sub-module, configured to update, based on the model parameter of the base model in response to the model configuration instruction initiated by the user, a configuration parameter of a full connection sub-module and a normalization sub-module of the decoding module in the base model, to obtain the first model.

In an optional embodiment of the present embodiment, the model configuration module 803 includes: a model parameter updating sub-module, configured to update, based on the model parameter of the base model in response to the model configuration instruction initiated by the user, an output dimension of a full connection sub-module and a normalization sub-module of the decoding module in the base model to two-dimensional.

In an optional embodiment of the present embodiment, the model loss function includes a ctc loss function and a ce loss function; the ctc loss function is configured to train the encoding module of the base model or the first model; the ce loss function is configured to train the decoding module of the base model or the first model.

In an optional embodiment of the present embodiment, the first training module 802 includes:
a first joint training sub-module, configured to perform joint training on the encoding module and the decoding module of the base model according to the voice recognition training data, and obtain the model parameter of the base model when both a ctc loss function corresponding to the encoding module and a ce loss function corresponding to the decoding module converge.

In an optional embodiment of the present embodiment, the second training module 805 includes:
a second joint training sub-module, configured to perform joint training on an encoding module and a decoding module of the first model according to the voice wake-up training data, and obtain the first model when both a ctc loss function corresponding to the encoding module and a ce loss function corresponding to the decoding module converge.

In an optional embodiment of the present embodiment, the first acquiring module 801 includes:
a first receiving sub-module, configured to receive first audio data input by the user, where the first audio data is audio data containing a self-defined wake-up word;
a first feature extraction sub-module, configured to perform feature extraction on the first audio data to obtain an FBank feature corresponding to the first audio data;
a first acquiring sub-module, configured to acquire a semantic tag sequence and a syllable sequence corresponding to the first audio data; and
a first creating sub-module, configured to take the FBank feature, the semantic tag sequence and the syllable sequence corresponding to the first audio data as a set of training data for the voice recognition training.

In an optional embodiment of the present embodiment, the second acquiring module 804 includes:
a second creating sub-module, configured to take an FBank feature, a semantic tag sequence and a wake-up tag corresponding to the first audio data input by the user as a set of positive-example data for the voice wake-up training, where the first audio data is audio data containing a self-defined wake-up word;
a second receiving sub-module, configured to receive second audio data input by the user, and perform feature extraction on the second audio data to obtain an FBank feature corresponding to the second audio data, where the second audio data is audio data excluding the self-defined wake-up word; and
a third creating sub-module, configured to take the FBank feature corresponding to the second audio data, a randomly generated semantic tag sequence and a non-wake-up tag as a set of negative-example data for the voice wake-up training, where the randomly generated semantic tag sequence is different from a semantic tag sequence corresponding to the second audio data.

The apparatus for training the voice wake-up model according to the present embodiment can be used to perform the model training method in the forgoing method embodiments, which is implemented using the similar principle and produces the similar technical effect, and details for which will not be described here again.

FIG. 9 is a schematic structural diagram of an apparatus for voice wake-up according to an embodiment of the present disclosure. The apparatus for voice wake-up according to the present embodiment may be an electronic device or an apparatus in the electronic device. As shown in FIG. 9, the apparatus for voice wake-up 900 according to the embodiment of the present disclosure may include:
a receiving module 901, configured to receive audio data input by a user;
a feature extraction module 902, configured to perform feature extraction on the audio data to obtain an FBank feature corresponding to the audio data;
a first processing module 903, configured to encode, based on an encoding module of a voice wake-up model, the FBank feature corresponding to the audio data to obtain a feature coding sequence corresponding to the audio data;
a second processing module 904, configured to determine, with use of ctc decoding, a target feature coding sequence of the feature coding sequence having a score greater than or equal to a preset value;
an acquiring module 905, configured to acquire a semantic tag sequence corresponding to a user-defined wake-up word; and
a third processing module 906, configured to decode and analyze the target feature coding sequence and the semantic tag sequence based on a decoding module of the voice wake-up model, and determine whether to awaken a terminal device.

The apparatus for voice wake-up according to the present embodiment can be used to perform the voice wake-up method in the forgoing method embodiments, which is implemented using the similar principle and produces the similar technical effect, and details for which will not be described here again.

According to embodiments of the present disclosure, the present disclosure further provides an electronic device, a readable storage medium and a computer program product.

According an embodiment of the present disclosure, the present disclosure further provides a computer program product. The computer program product includes a computer program, where the computer program is stored in a readable storage medium from which at least one processor of an electronic device may read the computer program, and the at least one processor executes the computer program to enable the electronic device to perform the scheme according to any one of the forgoing embodiments.

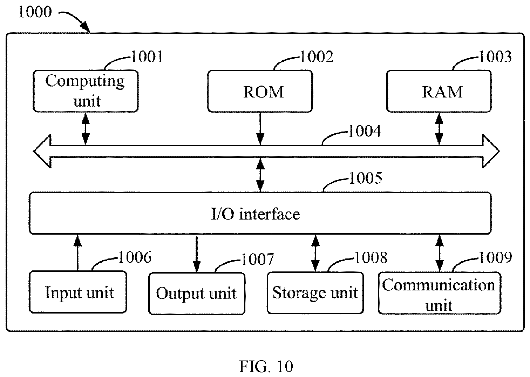

FIG. 10 is a schematic structural diagram of an electronic device according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital assistant, a cellular phone, a smart phone, a wearable device and other similar computing devices. The components shown herein, their connections and relationships, and their functions are only examples, and are not intended to limit the implementation of the present disclosure described and/or claimed herein.

As shown in FIG. 10, the device 1000 includes a computing unit 1001, which can perform various appropriate actions and processes according to a computer program stored in a read only memory (ROM) 1002 or a computer program loaded from a storage unit 1008 into a random access memory (RAM) 1003. In the RAM 1003, various programs and data required for the operation of the device 1000 can also be stored. The computing unit 1001, the ROM 1002, and the RAM 1003 are connected to each other through a bus 1004. An input/output (I/O) interface 1005 is also connected to the bus 1004.

Multiple components in the device 1000 are connected to the I/O interface 1005, including an input unit 1006, such as a keyboard, a mouse, etc.; an output unit 1007, such as various types of displays, speakers, etc.; a storage unit 1008, such as a magnetic disk, an optical disk, etc.; and a communication unit 1009, such as a network card, a modem, a wireless communication transceiver, etc. The communication unit 1009 allows the device 1000 to exchange information/data with other devices through a computer network such as the Internet and/or various telecommunication networks.

The computing unit 1001 can be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, micro-controller, etc. The computing unit 1001 executes the various methods and processes described above, such as the method for training the voice wake-up model or the method for voice wake-up. For example, in some embodiments, the method for training the voice wake-up model or the method for voice wake-up can be implemented as a computer software program tangibly embodied in a machine-readable medium, such as the storage unit 1008. In some embodiments, part or all of the computer program can be loaded and/or installed on the device 1000 via the ROM 1002 and/or the communication unit 1009. When the computer program is loaded into the RAM 1003 and executed by the computing unit 1001, one or more steps of the method for training the voice wake-up model or the method for voice wake-up described above can be performed. Alternatively, in other embodiments, the computing unit 1001 may be configured to execute the method for training the voice wake-up model or the method for voice wake-up by any other suitable means (for example, by means of firmware).

The various embodiments of the systems and technologies described above can be implemented in a digital electronic circuit system, an integrated circuit system, a field programmable gate array (FPGA), an application specific integrated circuit (ASIC), an application specific standard products (ASSP), a system-on-chip (SOC), a complex programmable logic device (CPLD), computer hardware, firmware, software, and/or combinations thereof. These various embodiments may include: being implemented in one or more computer programs that can be executed and/or interpreted on a programmable system including at least one programmable processor, which can be a special-purpose or general-purpose programmable processor that can receive data and instructions from and transmit data and instructions to a storage system, at least one input apparatus, and at least one output apparatus.

The program codes for implementing the method of the present disclosure can be written in any combination of one or more programming languages. These program codes may be provided to the processors or controllers of general-purpose computers, special-purpose computers or other programmable data processing apparatuses, so that when executed by the processors or controllers, the program codes cause the functions/operations specified in the flowcharts and/or block diagrams to be implemented. The program codes can be completely executed on the machine, partially executed on the machine, partially executed on the machine as an independent software package, partially executed on a remote machine or completely executed on a remote machine or server.

In the context of the present disclosure, a machine-readable medium can be a tangible medium that can contain or store a program for use by or in connection with an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses or devices, or any suitable combination of the above. More specific examples of the machine-readable storage medium will include electrical connection based on one or more wires, portable computer disk, hard disk, random access memory (RAM), read-only memory (ROM), erasable programmable read-only memory (EPROM or flash memory), optical fiber, compact disk read-only memory (CD-ROM), optical storage device, magnetic storage device, or any suitable combination of the above.

To provide interaction with users, the systems and technologies described herein can be implemented on a computer, which has a display device (for example, a cathode ray tube (CRT) or an liquid crystal display (LCD) monitor) for displaying information to users; and a keyboard and a pointing apparatus (for example, a mouse or a trackball) through which a user can provide input to the computer. Other kinds of apparatus can also be used to provide interaction with users; for example, the feedback provided to the user can be any form of sensory feedback (e.g., visual feedback, auditory feedback, or tactile feedback); and the input from the user can be received in any form (including acoustic input, voice input or tactile input).

The systems and technologies described herein can be implemented in a computing system including a back-end component (e.g., as a data server), a computing system including a middleware component (e.g., an application server), or a computing system including a front-end component (e.g., a user computer with a graphical user interface or a web browser through which users can interact with the embodiments of the systems and technologies described herein), or a computer system including any combination of such back-end component, middleware component, or front-end component. The components of the system can be connected to each other by digital data communication in any form or medium (e.g., communication network). Examples of the communication network include: a local area network (LAN), a wide area network (WAN) and the Internet.

A computer system may include a client and a server. The client and the server are usually far away from each other and usually interact through a communication network. The relationship between the client and the server is generated by computer programs running on corresponding computers and having a client-server relationship with each other. The server may be a cloud server, which is also known as a cloud computing server or a cloud host, which is a host product in the cloud computing service system, so as to solve the shortcomings of traditional physical host and virtual private server (VPS), such as difficulty in management and weakness in business scalability. The server can also be a server of a distributed system or a server combined with a block chain.

It should be understood that steps can be reordered, added, or deleted using various forms of processes shown above. For example, the steps described in the present disclosure can be executed in parallel, sequentially or in different orders, so long as the desired results of the technical solutions disclosed in the present disclosure can be achieved, which is not limited here.

The above specific embodiments do not limit the scope of protection of the present disclosure. Those of ordinary skills in the art should understand that various modifications, combinations, sub-combinations and substitutions can be made according to design requirements and other factors. Any modification, equivalent substitution and improvement made within the principle of the present disclosure shall be included in the scope of protection of the present disclosure.

## Claims

1. A method for training a voice wake-up model, comprising:
acquiring voice recognition training data, and performing voice recognition training on a base model according to the voice recognition training data to obtain a model parameter of the base model when a model loss function converges, wherein the base model comprises an encoding module and a decoding module;
updating, based on the model parameter of the base model in response to a model configuration instruction initiated by a user, a configuration parameter of the decoding module in the base model to obtain a first model;
acquiring voice wake-up training data, and performing voice wake-up training on the first model according to the voice wake-up training data to obtain the first model when the model loss function converges; and
taking the first model when the model loss function converges as the voice wake-up model.

2. The method according to claim 1, wherein the updating, based on the model parameter of the base model in response to the model configuration instruction initiated by the user, the configuration parameter of the decoding module in the base model to obtain the first model comprises:
updating, based on the model parameter of the base model in response to the model configuration instruction initiated by the user, a configuration parameter of a full connection sub-module and a normalization sub-module of the decoding module in the base model to obtain the first model.

3. The method according to claim 1 or 2, wherein the updating, based on the model parameter of the base model in response to the model configuration instruction initiated by the user, the configuration parameter of the decoding module in the base model to obtain the first model comprises:
updating, based on the model parameter of the base model in response to the model configuration instruction initiated by the user, an output dimension of a full connection sub-module and a normalization sub-module of the decoding module in the base model to two-dimensional.

4. The method according to any one of claims 1 to 3, wherein the model loss function comprises a connectionist temporal classification ctc loss function and a cross-entropy error ce loss function;
the ctc loss function is configured to train the encoding module of the base model or the first model;
the ce loss function is configured to train the decoding module of the base model or the first model.

5. The method according to any one of claims 1 to 4, wherein the performing the voice recognition training on the base model according to the voice recognition training data to obtain the model parameter of the base model when the model loss function converges comprises:
performing joint training on the encoding module and the decoding module of the base model according to the voice recognition training data, and obtaining the model parameter of the base model when both a ctc loss function corresponding to the encoding module and a ce loss function corresponding to the decoding module converge.

6. The method according to any one of claims 1 to 4, wherein the performing the voice wake-up training on the first model according to the voice wake-up training data to obtain the first model when the model loss function converges comprises:
performing joint training on an encoding module and a decoding module of the first model according to the voice wake-up training data, and obtaining the first model when both a ctc loss function corresponding to the encoding module and a ce loss function corresponding to the decoding module converge.

7. The method according to any one of claims 1 to 6, wherein the acquiring the voice recognition training data comprises:
receiving first audio data input by the user, wherein the first audio data is audio data containing a self-defined wake-up word;
performing feature extraction on the first audio data to obtain a FilterBank FBank feature corresponding to the first audio data;
acquiring a semantic tag sequence and a syllable sequence corresponding to the first audio data; and
taking the FBank feature, the semantic tag sequence and the syllable sequence corresponding to the first audio data as a set of training data for the voice recognition training.

8. The method according to any one of claims 1 to 6, wherein the acquiring the voice wake-up training data comprises:
taking an FBank feature, a semantic tag sequence and a wake-up tag corresponding to the first audio data input by the user as a set of positive-example data for the voice wake-up training, wherein the first audio data is audio data containing a self-defined wake-up word;
receiving second audio data input by the user, and performing feature extraction on the second audio data to obtain an FBank feature corresponding to the second audio data, wherein the second audio data is audio data excluding the self-defined wake-up word; and
taking the FBank feature corresponding to the second audio data, a randomly generated semantic tag sequence and a non-wake-up tag as a set of negative-example data for the voice wake-up training, wherein the randomly generated semantic tag sequence is different from a semantic tag sequence corresponding to the second audio data.

9. A method for voice wake-up, applied to a terminal device and comprising:
receiving audio data input by a user;
performing feature extraction on the audio data to obtain a FilterBank FBank feature corresponding to the audio data;
encoding, based on an encoding module of a voice wake-up model, the FBank feature corresponding to the audio data to obtain a feature coding sequence corresponding to the audio data; determining, with use of connectionist temporal classification ctc decoding, a target feature coding sequence of the feature coding sequence having a score greater than or equal to a preset value;
acquiring a semantic tag sequence corresponding to a user-defined wake-up word; and
decoding and analyzing the target feature coding sequence and the semantic tag sequence based on a decoding module of the voice wake-up model, and determining whether to awaken the terminal device.

10. An apparatus for training a voice wake-up model, comprising:
a first acquiring module, configured to acquire voice recognition training data;
a first training module, configured to perform voice recognition training on a base model according to the voice recognition training data to obtain a model parameter of the base model when a model loss function converges, wherein the base model comprises an encoding module and a decoding module;
a model configuration module, configured to update, based on the model parameter of the base model in response to a model configuration instruction initiated by a user, a configuration parameter of the decoding module in the base model to obtain a first model;
a second acquiring module, configured to acquire voice wake-up training data;
a second training module, configured to perform voice wake-up training on the first model according to the voice wake-up training data to obtain the first model when the model loss function converges; and
a model generating module, configured to take the first model when the model loss function converges as the voice wake-up model.

11. The apparatus according to claim 10, wherein the model configuration module comprises: a model parameter updating sub-module, configured to update, based on the model parameter of the base model in response to the model configuration instruction initiated by the user, a configuration parameter of a full connection sub-module and a normalization sub-module of the decoding module in the base model to obtain the first model.

12. The apparatus according to claim 10 or 11, wherein the model configuration module comprises: a model parameter updating sub-module, configured to update, based on the model parameter of the base model in response to the model configuration instruction initiated by the user, an output dimension of a full connection sub-module and a normalization sub-module of the decoding module in the base model to two-dimensional.

13. The apparatus according to any one of claims 10 to 12, wherein the model loss function comprises a connectionist temporal classification ctc loss function and a cross-entropy error ce loss function;
the ctc loss function is configured to train the encoding module of the base model or the first model;
the ce loss function is configured to train the decoding module of the base model or the first model.

14. The apparatus according to any one of claims 10 to 13, wherein the first training module comprises:
a first joint training sub-module, configured to perform joint training on the encoding module and the decoding module of the base model according to the voice recognition training data, and obtain the model parameter of the base model when both a ctc loss function corresponding to the encoding module and a ce loss function corresponding to the decoding module converge.

15. The apparatus according to any one of claims 10 to 13, wherein the second training module comprises:
a second joint training sub-module, configured to perform joint training on an encoding module and a decoding module of the first model according to the voice wake-up training data, and obtain the first model when both a ctc loss function corresponding to the encoding module and a ce loss function corresponding to the decoding module converge.

16. The apparatus according to any one of claims 10 to 15, wherein the first acquiring module comprises:
a first receiving sub-module, configured to receive first audio data input by the user, wherein the first audio data is audio data containing a self-defined wake-up word;
a first feature extraction sub-module, configured to perform feature extraction on the first audio data to obtain a FilterBank FBank feature corresponding to the first audio data;
a first acquiring sub-module, configured to acquire a semantic tag sequence and a syllable sequence corresponding to the first audio data; and
a first creating sub-module, configured to take the FBank feature, the semantic tag sequence and the syllable sequence corresponding to the first audio data as a set of training data for the voice recognition training.

17. The apparatus according to any one of claims 10 to 15, wherein the second acquiring module comprises:
a second creating sub-module, configured to take an FBank feature, a semantic tag sequence and a wake-up tag corresponding to the first audio data input by the user as a set of positive-example data for the voice wake-up training, wherein the first audio data is audio data containing a self-defined wake-up word;
a second receiving sub-module, configured to receive second audio data input by the user, and perform feature extraction on the second audio data to obtain an FBank feature corresponding to the second audio data, wherein the second audio data is audio data excluding the self-defined wake-up word; and
a third creating sub-module, configured to take the FBank feature corresponding to the second audio data, a randomly generated semantic tag sequence and a non-wake-up tag as a set of negative-example data for the voice wake-up training, wherein the randomly generated semantic tag sequence is different from a semantic tag sequence corresponding to the second audio data.

18. An apparatus for voice wake-up, comprising:
a receiving module, configured to receive audio data input by a user;
a feature extraction module, configured to perform feature extraction on the audio data to obtain a FilterBank FBank feature corresponding to the audio data;
a first processing module, configured to encode, based on an encoding module of a voice wake-up model, the FBank feature corresponding to the audio data to obtain a feature coding sequence corresponding to the audio data;
a second processing module, configured to determine, with use of connectionist temporal classification ctc decoding, a target feature coding sequence of the feature coding sequence having a score greater than or equal to a preset value;
an acquiring module, configured to acquire a semantic tag sequence corresponding to a user-defined wake-up word; and
a third processing module, configured to decode and analyze the target feature coding sequence and the semantic tag sequence based on a decoding module of the voice wake-up model, and determine whether to awaken a terminal device.

19. An electronic device, comprising:
at least one processor, and
a memory communicatively connected with the at least one processor;
wherein the memory has stored therein instructions executable by the at least one processor, and the instructions, when executed by the at least one processor, enable the at least one processor to implement the method according to any one of claims 1 to 8 or the method according to claim 9.

20. A non-transitory computer-readable storage medium on which computer instructions are stored, wherein the computer instructions are configured to enable the computer to implement the method according to any one of claims 1 to 8 or the method according to claim 9.

21. A computer program product, comprising: a computer program, wherein the method according to any one of claims 1 to 8 or the method according to claim 9 is implemented when the computer program is executed by a processor.
